# FASCICULE DE BREVET EUROPEEN

(11) **EP 1 938 447 B1**
(45) Date de publication et mention de la délivrance du brevet: **22.06.2011**
(21) Numéro de dépôt: 06820325.6
(22) Date de dépôt: 19.10.2006
(51) Int. Cl.: H02P 9/04, F02D 29/06

(54) **DISPOSITIF DE CONTROLE D'UN GROUPE ELECTROGENE**
EINRICHTUNG ZUR STEUERUNG EINES STROMGENERATORS
DEVICE FOR CONTROLLING A GENERATING SET

(30) Priorité: 20.10.2005 FR 0553191
(43) Date de publication de la demande: 02.07.2008
(73) Titulaire: Moteurs Leroy Somer, 16000 Angouleme (FR)
(72) Inventeur: CZAJKOWSKI, François, F-16730 Linars (FR)
(74) Mandataire: Tanty, François
(86) Numéro de dépôt international: PCT/FR2006/051069
(87) Numéro de publication internationale: WO 2007/045801

(56) Documents cités:
- WO-A-2004/053295
- WO-A-2005/034329
- US-A- 5 321 308
- US-A- 5 703 410
- US-A1- 2002 198 648
- US-B1- 6 486 639

## Description

La présente invention concerne le domaine de la régulation des groupes électrogènes comportant un moteur thermique. Le document US5703410 divulgue un dispositif de contrôle d'un moteur thermique qui entraîne un alternateur.

L'invention s'applique à la régulation des moteurs thermiques équipés d'au moins un actionneur électrique pour commander le régime du moteur, par exemple l'injection du carburant.

Des groupes électrogènes connus associent un moteur thermique et un alternateur comportant chacun leur propre dispositif de régulation, le moteur thermique comportant un régulateur de vitesse et l'alternateur comportant un régulateur de tension.

Ces deux régulateurs sont indépendants l'un de l'autre : lorsque la charge appliquée à l'alternateur varie, chaque régulateur est configuré pour réagir séparément et indépendamment de l'autre de sorte que les influences réciproques des variations de tension et des variations de vitesse apportent un certain retard dans la régulation.

Par ailleurs, le fonctionnement stable des régulateurs produit également un certain retard lors d'une variation brusque de charge.

Enfin, les constantes de temps électriques du ou des actionneurs du moteur thermique et de l'excitatrice de l'alternateur, et les constantes de temps mécaniques ajoutent encore d'autres retards.

Il existe donc un besoin pour bénéficier d'un dispositif de contrôle d'un groupe électrogène permettant de réagir plus rapidement aux applications de charge ou aux délestages, et de revenir plus rapidement d'un régime transitoire à un régime normal.

L'invention a pour but d'améliorer le comportement en régime transitoire d'un groupe électrogène comportant un moteur thermique, de manière à permettre par exemple de diminuer l'amplitude des variations de vitesse et des variations de tension qui résultent du régime transitoire.

La présente invention y parvient en proposant un dispositif de contrôle selon la revendication 1 et un procédé selon la revendication 18.

La variation de charge de l'alternateur peut se traduire par une variation de vitesse de l'alternateur.

Le dispositif selon l'invention peut permettre de stabiliser la vitesse et/ou la tension de sortie de l'alternateur.

Le dispositif selon l'invention permet d'utiliser une information provenant par exemple d'un régulateur de tension de l'alternateur pour agir le plus directement possible sur le moteur thermique afin de permettre une réaction plus rapide de ce moteur thermique à une application de charge ou un délestage appliqué à l'alternateur. Le dispositif selon l'invention permet ainsi d'obtenir un temps de réponse en vitesse plus court à l'application d'une charge ou à un délestage. Cela peut permettre de réduire l'amplitude de variation de la vitesse aussi bien à l'application d'une charge qu'au délestage et d'augmenter ainsi la capacité de prise en charge du groupe électrogène pour une même variation de vitesse.

Une partie de la variation de tension en régime transitoire étant causée par la variation de vitesse de rotation du moteur thermique, on peut diminuer la variation de tension en réduisant la variation de vitesse, pour une même variation de la charge.

La charge peut être connectée directement aux bornes de l'alternateur. Le dispositif peut par exemple être dépourvu d'onduleur et/ou de redresseur aux bornes de l'alternateur.

Le dispositif de contrôle peut délivrer un signal de commande qui agit directement sur le ou les actionneur(s). Le signal de commande peut se substituer ou se superposer à un signal de sortie du régulateur de vitesse lorsque la variation de charge est détectée.

En variante, le dispositif de contrôle peut délivrer un signal de commande qui agit sur le ou les actionneur(s) par l'intermédiaire d'une portion au moins du régulateur de vitesse. Le signal de commande peut par exemple se substituer à un signal du régulateur de vitesse. Le signal de commande peut par exemple se substituer à un signal de sortie d'un circuit de régulation du régulateur de vitesse. Ce circuit de régulation peut par exemple utiliser une stratégie d'action de type PID (proportionnelle-intégrale-dérivée) à plusieurs seuils.

Le signal de sortie du circuit de régulation de vitesse est un signal contrôlant la vitesse de rotation du moteur thermique, ce signal étant obtenu à la sortie du circuit de régulation, par exemple de type PID, qui traite l'écart entre la vitesse mesurée sur le moteur et une valeur de consigne de vitesse.

La valeur du signal de commande peut être déterminée en fonction de la fréquence et de la dérivée de la fréquence de la tension de l'alternateur.

Le groupe électrogène peut comporter un régulateur de tension de l'alternateur. La fréquence et la dérivée de la fréquence peuvent être déterminées dans le régulateur de tension de l'alternateur. En variante, la fréquence et la dérivée de la fréquence peuvent être déterminées entre le régulateur de tension de l'alternateur et le régulateur de vitesse du moteur thermique.

La détermination peut être effectuée au moyen d'une unité de traitement numérique.

Le signal de commande peut par exemple être un signal de type quasi-binaire, permettant de couper (=0) ou d'ouvrir totalement (=1) l'admission de carburant. La transition (0...1) ou (1...0) peut se faire pendant une durée imposée.

Le dispositif peut être configuré pour appliquer à l'actionneur la tension d'une batterie du groupe électrogène alimentant le régulateur de vitesse.

En variante, le dispositif peut être configuré pour appliquer à l'actionneur une tension supérieure à une tension d'une batterie du groupe électrogène alimentant le régulateur de vitesse.

Le dispositif peut encore comporter des moyens pour réduire la tension aux bornes de l'actionneur.

Le moteur thermique peut comporter un actionneur unique ou en variante une pluralité d'actionneurs. Ce ou ces actionneur(s) peuvent être des actionneurs électriques.

L'invention a encore pour objet un dispositif de contrôle d'un groupe électrogène à vitesse stabilisée et à tension stabilisée, fournissant un courant alternatif, le groupe électrogène comportant :
- un moteur thermique équipé d'au moins un actionneur pour commander l'admission de carburant,
- un alternateur entraîné par le moteur thermique, alimentant une charge directement connectée aux bornes de sortie de l'alternateur, et
- un régulateur de vitesse du moteur thermique commandant le ou les actionneur(s),
le dispositif de contrôle étant agencé pour détecter une variation de charge de l'alternateur en fonction d'au moins une tension de celui-ci et commander le ou les actionneur(s) de façon à compenser la variation de charge ainsi détectée.

La présente invention a encore pour objet, indépendamment ou en combinaison avec ce qui précède, un groupe électrogène comportant :
- un moteur thermique équipé d'au moins un actionneur pour commander l'admission de carburant,
- un alternateur entraîné par le moteur thermique,
- un régulateur de vitesse du moteur thermique commandant le ou les actionneur(s),
- un dispositif de contrôle agencé pour détecter une variation de charge de l'alternateur en fonction d'une tension de celui-ci et commander le ou les actionneur(s) de façon à compenser la variation de charge ainsi détectée.

Le dispositif de contrôle peut délivrer un signal de commande qui agit directement sur le ou les actionneur(s) en se substituant ou se superposant à un signal de sortie du régulateur de vitesse lorsque la variation de charge est détectée, ou délivrer un signal de commande qui agit sur le ou les actionneur(s) par l'intermédiaire d'une portion au moins du régulateur de vitesse en se substituant à un signal du régulateur de vitesse.

La tension de l'alternateur peut permettre d'obtenir sa fréquence et la dérivée de sa fréquence. La variation de charge peut être détectée en détectant une variation de la fréquence de la tension.

L'invention a encore pour objet, indépendamment ou en combinaison avec ce qui précède, un procédé de contrôle d'un moteur thermique d'un groupe électrogène comportant un alternateur entraîné par le moteur thermique, dans lequel :
- on surveille la tension délivrée par l'alternateur,
- on détecte à partir de la tension surveillée une variation éventuelle de charge de l'alternateur,
- en fonction de la variation de charge ainsi détectée, on agit sur au moins un actionneur du moteur thermique de façon à provoquer une modification de l'admission de carburant visant à compenser la variation de vitesse du groupe électrogène.

On peut délivrer un signal de commande qui agit directement sur le ou les actionneur(s) en se substituant ou se superposant à un signal de sortie du régulateur de vitesse lorsque la variation de charge est détectée, ou en variante on peut délivrer un signal de commande qui agit sur le ou les actionneur(s) par l'intermédiaire d'une portion au moins du régulateur de vitesse en se substituant à un signal du régulateur de vitesse.

Le procédé peut permettre de stabiliser la vitesse du groupe électrogène.

L'invention a encore pour objet un procédé de contrôle d'un moteur thermique d'un groupe électrogène à vitesse stabilisée, comportant un alternateur entraîné par le moteur thermique et un régulateur de vitesse du moteur thermique, dans lequel :
- on surveille la tension délivrée aux bornes de l'alternateur,
- on détecte à partir de la tension surveillée une variation éventuelle de charge de l'alternateur,
- en fonction de la variation de charge ainsi détectée, on agit sur au moins un actionneur du moteur thermique de façon à provoquer une modification de l'admission en carburant de ce moteur thermique visant à compenser la variation de vitesse du groupe électrogène

Lorsqu'on détecte un accroissement brusque de la charge de l'alternateur, on peut agir sur le ou les actionneurs de façon à augmenter l'admission en carburant du moteur. En cas de diminution brusque de la charge, on peut agir sur le ou les actionneurs de façon à réduire l'admission en carburant du moteur.

On peut agir sur le ou les actionneurs en aval d'un régulateur de vitesse du moteur thermique. En variante, on peut agir sur le ou les actionneurs électriques en aval d'au moins une partie d'un circuit de régulation du régulateur de vitesse du moteur thermique.

On peut augmenter la tension appliquée aux bornes du ou des actionneur(s) pour augmenter l'admission en carburant du moteur. On peut réduire le courant dans un inducteur du ou des actionneurs pour réduire l'admission en carburant du moteur.

Le courant aux bornes de l'alternateur peut être alternatif, étant monophasé ou polyphasé.

L'invention pourra être mieux comprise à la lecture de la description détaillée qui va suivre, d'exemples de mise en oeuvre non limitatif de celle-ci, et à l'examen du dessin annexé, sur lequel :
- la figure 1 illustre, de manière schématique et partielle, un premier exemple de réalisation de l'invention, et
- les figures 2 à 4 illustrent, de manière schématique et partielle, des variantes de réalisation de l'invention.

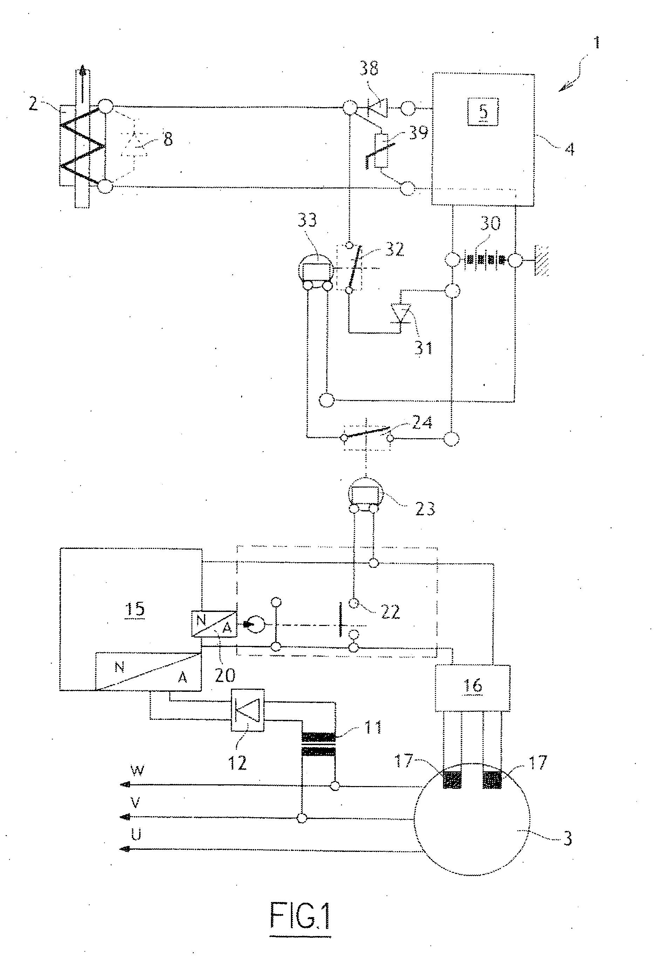

On a représenté à la figure 1 un dispositif 1 de contrôle d'un groupe électrogène.

Ce groupe électrogène comporte un moteur thermique non représenté, équipé d'au moins un actionneur électrique 2 permettant de commander le régime du moteur, directement ou indirectement, par exemple par l'intermédiaire d'une pompe à injection. L'actionneur 2 peut commander l'admission du carburant, par exemple en commandant l'injection, ou en variante l'entrée d'air. L'actionneur peut par exemple comporter une électrovanne qui est plus ou moins ouverte en fonction de la tension appliquée à ses bornes. L'actionneur peut encore comporter une diode de roue libre 8 permettant d'éviter les surtensions à l'ouverture du circuit d'alimentation électrique.

Le groupe électrogène comporte également un alternateur 3 entraîné par ce moteur thermique.

Le régime du moteur thermique est commandé par un régulateur de vitesse 4 qui agit sur le ou les actionneurs électriques 2 et peut comporter un circuit de régulation 5, par exemple de type PID. Ce circuit de régulation 5 peut fournir un signal d'erreur de vitesse, c'est-à-dire un signal imposant l'admission de la quantité de carburant nécessaire au moteur thermique en fonction de l'écart entre la vitesse mesurée sur le moteur et une valeur de consigne de vitesse. La vitesse mesurée permet de fournir un signal composite (par exemple P+I+D).

Le dispositif de contrôle 1 comporte une unité de traitement numérique 15. L'unité de traitement numérique 15 comporte par exemple un ou plusieurs circuits numériques, par exemple un ou plusieurs microprocesseur(s) ou microcontrôleur(s).

Cette unité de traitement numérique 15 est agencée pour recevoir au moins une information représentative d'une tension de l'alternateur, par exemple la tension aux bornes de deux phases de l'alternateur, et en cas de variation d'un ou plusieurs paramètres de la tension, agir sur la régulation de vitesse du moteur thermique.

L'unité de traitement numérique 15 peut agir sur l'actionneur électrique 2, comme expliqué plus loin.

L'alternateur 3 délivre un courant triphasé ayant des phases U, V et W. La surveillance de la tension aux bornes de deux phases de l'alternateur s'effectue par exemple grâce à un transformateur d'isolation 11 et un pont redresseur 12.

La tension à la sortie du pont redresseur est par exemple convertie en un signal numérique par un convertisseur analogique-numérique avant d'être traité par l'unité de traitement numérique 15.

Cette dernière peut être alimentée par une alimentation stabilisée branchée sur des bobinages auxiliaires 17 de l'alternateur, ces bobinages étant par exemple au nombre de deux. Les bobinages auxiliaires 17 peuvent par exemple également servir à alimenter l'inducteur de l'excitatrice de l'alternateur par l'intermédiaire d'un régulateur de tension 16, comme décrit dans la demande de brevet EP-A1-0 233 425.

L'unité de traitement numérique 15 peut être agencée pour déterminer à partir de la lecture de la tension de l'alternateur les valeurs de la fréquence et de la dérivée de la fréquence.

L'unité de traitement numérique peut être agencée pour effectuer une stratégie d'action par exemple de type Proportionnelle + Dérivée rapide qui met en oeuvre des choix logiques concernant la fréquence et la dérivée de la fréquence qui sont comparées à des niveaux de référence.

Le traitement effectué et le choix de ces niveaux de référence peut permettre d'éliminer l'influence de la modulation de fréquence due à l'irrégularité cyclique propre aux moteurs à explosion.

L'unité de traitement numérique 15 peut comporter une sortie destinée à commander l'ouverture ou la fermeture d'un contact 22 afin d'exercer ou non une action sur la régulation du moteur thermique.

Cette sortie commande par exemple un relais et comporte par exemple un convertisseur analogique numérique 20. En variante, la sortie est dépourvue de convertisseur analogique-numérique.

La fermeture du contact 22 entraîne par l'intermédiaire d'un relais plus puissant 23 la fermeture d'un contact 24 qui commande lui-même celle d'un contact 32 par l'intermédiaire d'un relais 33.

Le relais 24 est par exemple alimenté par une batterie 30 qui sert à l'alimentation du régulateur de vitesse 4.

La fermeture du contact 32 entraîne l'application d'une tension à l'actionneur électrique 2 qui vient se substituer ou se superposer à celle délivrée par le régulateur de vitesse 4 qui commande l'injection du carburant.

Une diode 38 de sortie du régulateur de vitesse 4 permet la superposition des tensions. Le signal de commande permet d'imposer une valeur haute à la tension aux bornes de l'actionneur.

La fermeture du contact 22 intervient lorsque l'unité de traitement numérique 15 détecte l'application d'une charge à l'alternateur 3.

Le dispositif illustré à la figure 1 permet d'appliquer à l'actionneur 2 la tension de la batterie 30 du groupe électrogène alimentant le régulateur de vitesse lors de l'application d'une charge à l'alternateur.

Bien entendu, on ne sort pas du cadre de la présente invention s'il en est autrement.

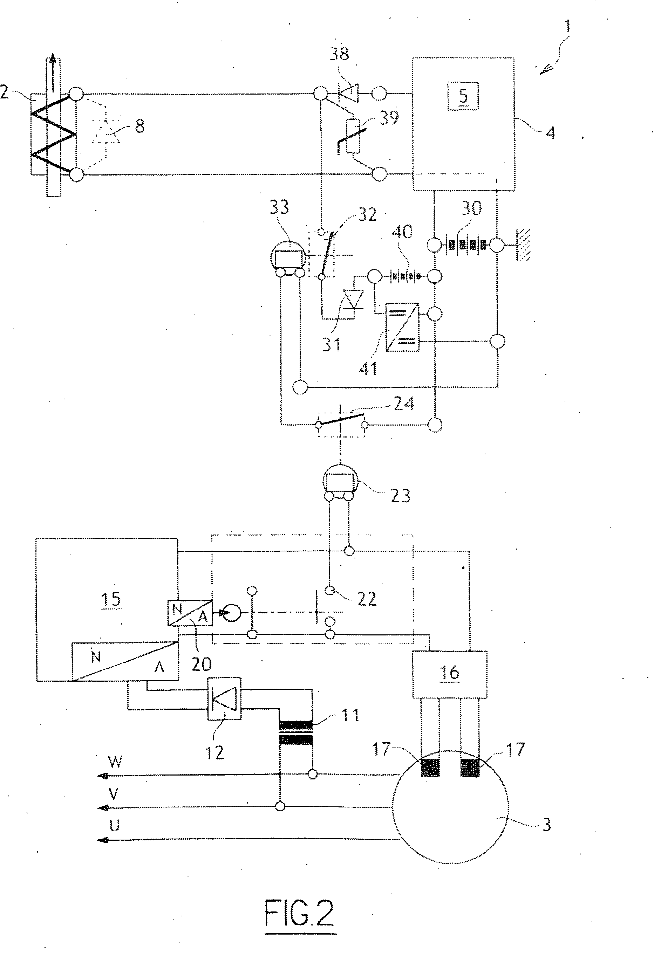

A titre d'exemple, on a représenté à la figure 2 une réalisation qui diffère de celle de la figure 1 par le fait qu'une tension supérieure à celle de la batterie 30 est appliquée à l'actionneur 2 lors de la fermeture du contact 32, cette tension étant obtenue grâce à une source électrique 40 reliée en série avec la batterie 30.

La source 40 peut être par exemple une batterie supplémentaire ou un condensateur électrolytique et peut être rechargée par exemple grâce à un convertisseur continu-continu 41.

Dans les exemples des figures 1 et 2, le dispositif réagit à l'application d'une charge.

Il peut en être autrement et notamment le dispositif 1 peut réagir à un délestage de charge ou peut réagir à la fois à l'application et au délestage d'une charge.

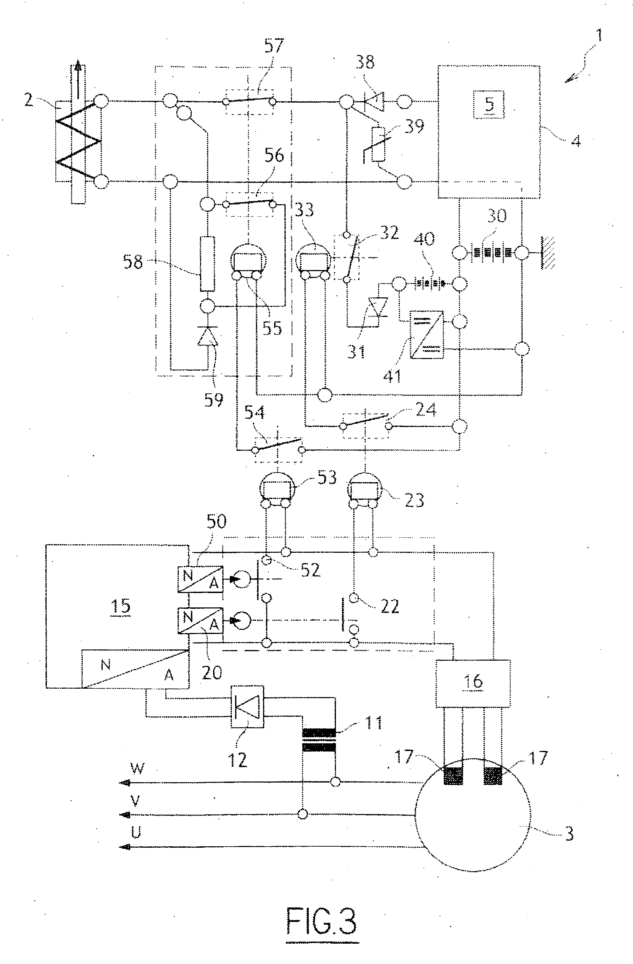

Dans l'exemple de la figure 3, l'unité de traitement numérique 15 est agencée pour délivrer un signal 50 en cas de détection d'un délestage de l'alternateur. Ce signal 50 est par exemple un signal analogique, l'unité de traitement numérique 15 comportant un convertisseur analogique-numérique permettant de délivrer le signal 50.

Le signal 50 provoque par exemple la fermeture d'un interrupteur 52, et en cascade l'ouverture d'un contact 54 par l'intermédiaire d'un relais 53 puis l'ouverture de contacts 56 et 57 par l'intermédiaire d'un relais 55 actionné par l'ouverture du contact 54.

La diode de roue libre 8 est dans ce cas remplacée par une diode 59 en série avec une résistance de décharge 58 qui est court-circuitée, quand le dispositif est inactivé, par le contact 56 du relais 55.

L'ouverture du contact 56 permet de réduire rapidement le courant dans l'inducteur de l'actionneur en connectant en parallèle à celui-ci la résistance de décharge 58. La diminution du courant dans l'actionneur 2 permet de réduire l'admission de carburant du moteur thermique.

Dans une variante non illustrée, la résistance de décharge 58 est remplacée par un circuit de soutirage comportant par exemple un condensateur de décharge permettant à l'ouverture des contacts 56, 57 de faire baisser plus rapidement le courant initial alimentant l'actionneur électrique.

Le dispositif de la figure 3 peut permettre de traiter de manière rapide les coupures de charge ou encore de couper l'injection de carburant en cas de survitesse. Du fait que le dispositif n'utilise pas les informations de vitesse et de survitesse des capteurs du moteur thermique, il contribue à augmenter la fiabilité et la sécurité du groupe électrogène.

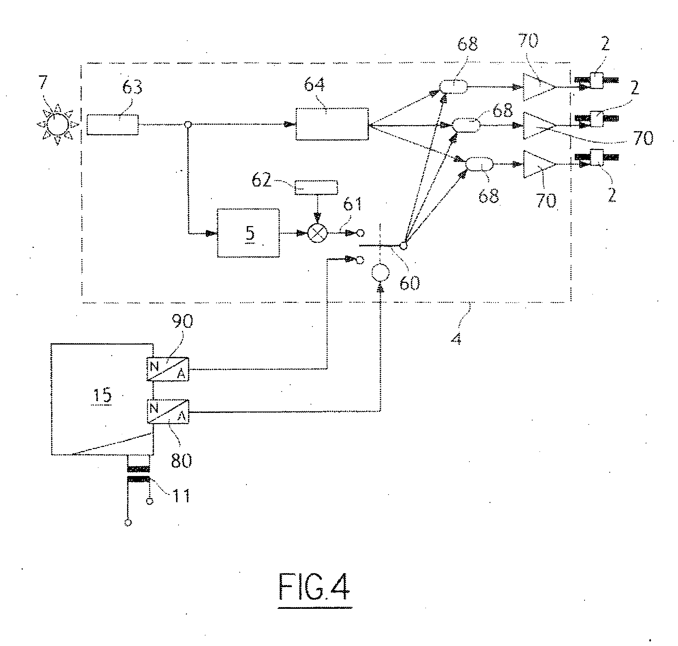

On ne sort pas du cadre de la présente invention lorsque le moteur thermique comporte plusieurs actionneurs électriques, associés par exemple à des cylindres ou groupes de cylindres respectifs, comme illustré à la figure 4.

Dans cet exemple, le régulateur de vitesse comporte un circuit de commande 70 de chaque actionneur.

La lecture de la vitesse de l'arbre du moteur thermique 7 peut s'effectuer par un détecteur 63, puis cette information peut être envoyée au circuit de régulation 5 et à un système de synchronisation 64.

Chaque actionneur 2 est commandé en fonction d'un signal d'erreur de vitesse 61 délivré par le circuit de régulation 5 en fonction d'une vitesse de consigne qui est par exemple contenue dans une mémoire 62.

L'unité de traitement numérique 15 peut être agencée pour commander par une sortie 80 un contact inverseur 60 qui permet de remplacer le signal d'erreur de vitesse 61 par un signal provenant d'une sortie 90 de l'unité de traitement numérique. L'unité de traitement numérique 15 peut permettre de générer le signal de commande destiné à remplacer dans le régulateur de vitesse le signal d'erreur de vitesse du régulateur de vitesse en cas d'application d'une charge à l'alternateur, c'est-à-dire lorsque par exemple la fréquence de l'onde de tension de l'alternateur est inférieure à un seuil f1 et lorsque la valeur de la dérivée de la fréquence est négative et inférieure à un seuil -dfl/dt. Réciproquement, le signal de commande peut être généré en cas de délestage de l'alternateur, c'est-à-dire lorsque la valeur de la fréquence de l'onde de tension est supérieure à un seuil f2 et lorsque la valeur de la dérivée de la fréquence est positive et supérieure à un seuil +dt2/dt.

Le système de synchronisation 64 permet de synchroniser et fixer la durée de l'actionnement des différents actionneurs 2 en fonction de la position angulaire de l'arbre et de la vitesse de rotation du moteur thermique 7 grâce à des circuits 68 qui réalisent la fonction logique ET entre le signal de synchronisation et le signal d'erreur de vitesse ou le signal de commande.

Dans ce qui vient d'être décrit, les contacts et relais représentés peuvent être des composants statiques ou non, par exemple des interrupteurs électroniques à semiconducteur, par exemple des transistors IGBT.

## Revendications

1. Dispositif de contrôle (1) d'un groupe électrogène, le groupe électrogène comportant :
- un moteur thermique (7) équipé d'au moins un actionneur (2) pour commander l'admission de carburant,
- un alternateur (3) entraîné par le moteur thermique (7), et
- un régulateur de vitesse (4) du moteur thermique commandant le ou les actionneur(s),
le dispositif de contrôle (1) étant agencé pour détecter une variation de charge de l'alternateur (3) en fonction d'au moins une tension de celui-ci et commander le ou les actionneur(s) (2) de façon à compenser la variation de charge ainsi détectée,
le dispositif de contrôle (1) délivrant un signal de commande qui agit directement sur le ou les actionneur(s) (2) en se substituant ou se superposant à un signal de sortie du régulateur de vitesse (4) lorsque la variation de charge est détectée, ou
le dispositif de contrôle (1) délivrant un signal de commande qui agit sur le ou les actionneur(s) (2) par l'intermédiaire d'une portion au moins du régulateur de vitesse (4) en se substituant à un signal du régulateur de vitesse (4).

2. Dispositif selon l'une quelconque des revendications précédentes, délivrant un signal de commande qui agit directement sur le ou les actionneur(s) (2) en se substituant ou se superposant à un signal de sortie du régulateur de vitesse (4) lorsque la variation de charge est détectée.

3. Dispositif selon le revendication 1 délivrant un signal de commande qui agit sur le ou les actionneur(s) (2) par l'intermédiaire d'une portion au moins du régulateur de vitesse (4) en se substituant à un signal du régulateur de vitesse (4).

4. Dispositif selon la revendication précédente, dans lequel le signal de commande se substitue à un signal de sortie d'un circuit de régulation du régulateur de vitesse (4).

5. Dispositif selon la revendication précédente, dans lequel le circuit de régulation utilise une stratégie d'action de type PID (proportionnelle-intégrale-derivée) à plusieurs seuils.

6. Dispositif selon l'une quelconque des revendications précédentes, dans lequel la valeur du signal de commande est déterminée en fonction de la fréquence et de la dérivée de la fréquence de la tension de l'alternateur (3).

7. Dispositif selon la revendication précédente, dans lequel le groupe électrogène comporte un régulateur de tension (16) de l'alternateur (3) et dans lequel la fréquence et la dérivée de la fréquence sont déterminées dans le régulateur de tension (16) de l'alternateur (3).

8. Dispositif selon la revendication dans lequel, le groupe électrogène comportant un régulateur de tension (16) de l'alternateur, la fréquence et la dérivée de la fréquence sont déterminées entre le régulateur de tension (16) de l'alternateur (3) et le régulateur de vitesse (4) du moteur thermique (7).

9. Dispositif selon l'une quelconque des revendications 6 à 8, dans lequel la détermination est effectuée au moyen d'une unité de traitement numérique (15).

10. Dispositif selon l'une quelconque des revendications précédentes, dans lequel le signal de commande est un signal de type quasi-binaire, permettant de couper ou d'ouvrir l'admission de carburant.

11. Dispositif selon l'une quelconque des revendications précédentes, configuré pour appliquer à l'actionneur (2) la tension d'une batterie (30) du groupe électrogène alimentant le régulateur de vitesse (4).

12. Dispositif selon l'une quelconque des revendications 1 à 10, configuré pour appliquer à l'actionneur (2) une tension supérieure à une tension d'une batterie (30) du groupe électrogène alimentant le régulateur de vitesse (4).

13. Dispositif selon l'une quelconque des revendications précédentes, comportant des moyens pour réduire la tension aux bornes de l'actionneur (2).

14. Dispositif selon l'une quelconque des revendications précédentes, dans lequel le moteur thermique (7) comporte un unique actionneur (2).

15. Dispositif selon l'une quelconque des revendications 1 à 13, dans lequel le moteur thermique (7) comporte une pluralité d'actionneurs (2).

16. Dispositif selon l'une quelconque des revendications précédentes, dans lequel ledit au moins un actionneur (2) est un actionneur électrique (2).

17. Groupe électrogène comportant:
- un moteur thermique (7) équipé d'au moins un actionneur électrique (2) pour commander l'admission de carburant,
- un alternateur (3) entraîné par le moteur thermique,
- un régulateur de vitesse (4) du moteur thermique commandant le ou les actionneurs(s),
- un dispositif de contrôle selon l'une quelconque des revendications précédentes.

18. Procédé de contrôle d'un moteur thermique (7) d'un groupe électrogène comportant un alternateur (3) entraîné par le moteur thermique, et un régulateur de vitesse (4) du moteur thermique (7), lequel :
- on surveille la tension délivrée par l'alternateur,
- on détecte à partir de la tension surveillée une variation éventuelle de charge de l'alternateur (3),
- en fonction de la variation de charge ainsi détectée, on agit sur au moins un actionneur électrique (2) du moteur thermique de façon à provoquer une modification de l'admission en carburant de ce moteur thermique (7) visant à compenser la variation de vitesse du groupe électrogène, en délivrant un signal de commande qui agit directement sur le ou les actionneur(s) (2) en se substituant ou se superposant à un signal de sortie du régulateur de vitesse (4) lorsque la variation de charge est détectée, ou en délivrant un signal de commande qui agit sur le ou les actionneur(s) (2) par l'intermédiaire d'une portion au moins du régulateur de vitesse (4) en se substituant a un signal du régulateur de vitesse (4).

19. Procédé selon la revendication précédente, dans lequel lorsque l'on détecte un accroissement de la charge de l'alternateur (3) on agit sur le ou les actionneurs électriques (2) de façon à augmenter l'admission en carburant du moteur.

20. Procédé la revendication 18, dans lequel lorsque l'on détecte une diminution de la charge de l'alternateur (3), on agit sur le ou les actionneurs (2) de façon à réduire l'admission en carburant du moteur.

21. Procédé selon l'une quelconque des revendications 18 à 20, dans lequel on agit sur le ou les actionneurs (2) en aval d'un régulateur de vitesse (4) du moteur thermique (7).

22. Procédé selon l'une quelconque des revendications 18 à 20, dans lequel on agit sur le ou les actionneurs (2) en aval d'au moins une partie d'un circuit de régulation du régulateur de vitesse (4) du moteur thermique (7).

23. Procédé selon l'une quelconque des revendications 18 à 22, dans lequel on augmente la tension appliquée au(x) actionneur(s) (2) pour augmenter l'admission en carburant du moteur.

24. Procédé selon l'une quelconque des revendications 18 à 23, dans lequel on réduit le courant dans un inducteur du ou des actionneurs (2) pour réduire l'admission en carburant du moteur (7).

## Claims

1. A control device (1) for an electricity generator set, the generator set comprising:
• a heat engine (7) fitted with at least one actuator (2) for controlling fuel admission;
• an alternator (3) driven by the heat engine (7); and
• a speed regulator (4) for the heat engine and controlling the actuator(s);
the control device (1) being arranged to detect a variation in the load on the alternator as a function of at least one voltage thereof and to control the actuator(s) in such a manner as to.compensate for the load variation thus detected;
the control device (1) delivering a control signal that acts directly on the actuator(s) taking the place of or being superposed on an output signal of the speed regulator (4) when a variation in load is detected; or
the control device (1) delivering a control signal that acts on the actuator(s) (2) via at least a portion of the speed regulator (4) by taking the place of a speed regulator signal (4).

2. A device according to either preceding claim, delivering a control signal that acts directly on the actuator(s) (2) taking the place of or being superposed on an output signal from the speed regulator (4) when the load variation is detected.

3. A device according to claim 1, delivering a control signal that acts on the actuator (s) (2) via at least a potion of the speed regulator (4), taking the place of a speed regulator (4) signal.

4. A device according to the preceding claim, in which the control signal takes the place of an output signal from a regulator circuit of the speed regulator (4).

5. A device according to the preceding claim, in which the regulator circuit makes use of a proportional integer derivative (PID) type action strategy having a plurality of thresholds.

6. A device according to any preceding claim, in which the value of the control signal is determined as a function of the frequency and the derivative of the frequency of the alternator (3) voltage.

7. A device according to the preceding claim, in which the electricity generator set comprises a voltage regulator (16) for the alternator (3) and in which the frequency and the derivative of the frequency are determined in the voltage regulator (16) of the alternator (3).

8. A device according to claim 6, in which the electricity generator set comprises a voltage regulator (16) for the alternator, the frequency and the derivative of the frequency being determined between the voltage regulator (16) of the alternator (3) and the speed regulator (4) of the engine (7).

9. A device according to any one of claims 6 to 8, in which the determination is performed by means of a digital processor unit (15).

10. A device according to any preceding claim, in which the control signal is a signal of quasi-binary type, enabling fuel admission to be closed or opened.

11. A device according to any preceding claim, configured to apply to the actuator (2) the voltage of a battery (30) of the electricity generator set and powering the speed regulator (4).

12. A device according to any one of claims 1 to 10, configured to apply to the actuator (2) a voltage greater than a voltage of a battery (30) of the electricity generator set and powering the speed regulator (4).

13. A device according to any preceding claim, including means for reducing the voltage across the terminals of the actuator (2).

14. A device according to any preceding claim, in which the heat engine (7) has a single actuator (2).

15. A device according to any one of claims 1 to 13, in which the heat engine (7) has a plurality of actuators (2) .

16. A device according to any preceding claim, in which said at least one actuator (2) is an electric actuator (2).

17. An electricity generator set comprising:
• a heat engine (7) fitted with at least one electric actuator (2) for controlling fuel admission;
• an alternator (3) driven by the heat engine;
• a speed regulator (4) for the heat engine and controlling the actuator (s) ; and
• a control device according to any one of the preceding claims.

18. A method of controlling a heat engine (7) of an electricity generator set comprising an alternator (3) driven by the heat engine, and a speed regulator (4) for the heat engine (7), the method comprising:
• monitoring the voltage delivered by the alternator (3);
• from the monitored voltage, detecting any variation in load on the alternator; and
• as a function of the load variation as detected, acting on at least one electric actuator (2) of the heat engine (7) in such a manner as to modify fuel admission to the engine so as to compensate the speed variation of the electricity generator set, by delivering a control signal that acts directly on the actuator(s) (2) taking the place of or being superposed on an output signal from the speed regulator (4) when load variation is detected, or by delivering a control signal that acts on the actuator(s) (2) via at least a portion of the speed regulator (4), taking the place of a signal of the speed regulator (4).

19. A method according to the preceding claim, in which, on detecting an increase in load on the alternator (3), action is taken on the electric actuator(s) in such a manner as to increase the admission of fuel to the engine.

20. A method according to claim 18, in which, on detecting a decrease in the load on the alternator (3) action is taken on the actuator(s) in such a manner as to reduce the admission of fuel to the engine.

21. A method according to any one of claims 18 to 20, in which action is taken on the actuator(s) downstream from a speed regulator (4) of the heat engine (7).

22. A method according to any one of claims 18 to 20, in which action is taken on the actuator(s) (2) downstream from at least a portion of a regulator circuit of the speed regulator (4) of the heat engine (7).

23. A method according to any one of claims 18 to 22, in which the voltage applied to the actuator(s) (2) is increased in order to increase the admission of fuel to the engine.

24. A method according to any one of claims 18 to 23, in which the current in an induction coil of the actuator(s) (2) is reduced in order to reduce the admission of fuel to the engine (7).

## Patentansprüche

1. Vorrichtung zur Steuerung (1) eines Stromerzeugersatzes, wobei der Stromerzeugersatz aufweist:
einen thermischen Motor (7), der wenigstens ein Stellglied (2) zum Steuern der Kraftstoffzufuhr aufweist,
einen durch den thermischen Motor (7) angetriebenen Wechselstromgenerator (3) und
einen Geschwindigkeitsregler (4) des thermischen Motors, der das oder die Stellglied(er) steuert,
wobei die Steuervorrichtung (1) dazu ausgelegt ist, eine Änderung der Last des Wechselstromgenerators (3) mittels wenigstens einer Spannung desselben zu erfassen und das oder die Stellglied(er) (2) so zu steuern, dass die so erfasste Laständerung kompensiert wird,
wobei die Steuervorrichtung (1) ein Steuersignal liefert, das direkt auf das oder die Stellglied(er) (2) wirkt, um ein Ausgangssignal des Geschwindigkeitsreglers (4) gemäß der erfassten Laständerung zu ersetzen oder zu überlagern, oder
wobei die Steuervorrichtung (1) ein Steuersignal liefert, das unter Zwischenschaltung wenigstens eines Abschnitts des Geschwindigkeitsreglers (4) auf das oder die Stellglied(er) (2) wirkt, um ein Signal des Geschwindigkeitsreglers (4) zu ersetzen.

2. Vorrichtung nach einem der vorstehenden Ansprüche, die ein Steuersignal liefert, das direkt auf das oder die Stellglied(er) (2) wirkt, um ein Ausgangssignal des Geschwindigkeitsreglers (4) gemäß der erfassten Laständerung zu ersetzen oder zu überlagern.

3. Vorrichtung nach Anspruch 1, die ein Steuersignal liefert, das auf das oder die Stellglied(er) (2) unter Zwischenschaltung wenigstens eines Abschnitts des Geschwindigkeitsreglers (4) wirkt, um ein Signal des Geschwindigkeitsreglers (4) zu ersetzen.

4. Vorrichtung nach dem vorstehenden Anspruch, wobei das Steuersignal ein Ausgangssignal einer Regelschaltung des Geschwindigkeitsreglers (4) ersetzt.

5. Vorrichtung nach dem vorstehenden Anspruch, wobei die Regelschaltung ein Wirkprinzip vom PID-Typ (Proportional-Integral-Differential) mit mehreren Stufen verwendet.

6. Vorrichtung nach einem der vorstehenden Ansprüche, wobei der Wert des Steuersignals anhand der Frequenz und der Ableitung der Frequenz der Spannung des wechselstromgenerators (3) bestimmt wird.

7. Vorrichtung nach dem vorstehenden Anspruch, wobei der Stromerzeugersatz einen Spannungsregler (16) des Wechselstromgenerators (3) aufweist und wobei die Frequenz und die Ableitung der Frequenz in dem Spannungsregler (16) des Wechselstromgenerators (3) bestimmt werden.

8. Vorrichtung nach Anspruch 6, wobei der Stromerzeugersatz einen Spannungsregler (16) des Wechselstromgenerators aufweist und die Frequenz und die Ableitung der Frequenz zwischen dem Spannungsregler (16) des Wechselstromgenerators (3) und dem Geschwindigkeitsregler (4) des thermischen Motors (7) bestimmt werden,

9. Vorrichtung nach einem der Ansprüche 6 bis 8, wobei die Bestimmung mittels einer numerischen Verarbeitungseinheit (15) durchgeführt wird.

10. Vorrichtung nach einem der vorstehenden Anspruche, wobei das Steuersignal ein quasi-binäres Signal ist, das ein Schließen oder Öffnen der Kraftstoffzufuhr erlaubt.

11. Vorrichtung nach einem der vorstehenden Ansprüche, die dazu ausgelegt ist, an das Stellglied (2) die Spannung einer Batterie (30) des Stromerzeugersatzes anzulegen, die den Geschwindigkeitsregler (4) versorgt.

12. Vorrichtung nach einem der Ansprüche 1 bis 10, die dazu ausgelegt ist, eine Spannung an das Stellglied (2) anzulegen, die höher ist als die Spannung der Batterie (30) des Stromerzeugersatzes, die den Geschwindigkeitsregler (4) versorgt.

13. Vorrichtung nach einem der vorstehenden Ansprüche, mit Mitteln zum Verringern der Spannung an Klemmen des Stellglieds (2).

14. Vorrichtung nach einem der vorstehenden Ansprüche, wobei der thermische Motor (7) ein einziges Stellglied (2) aufweist.

15. Vorrichtung nach einem der Ansprüche 1 bis 13, wobei der thermische Motor (7) mehrere Stellglieder (2) aufweist.

16. Vorrichtung nach einem der vorstehenden Ansprüche, wobei wenigstens ein Stellglied (2) ein elektrisches Stellglied (2) ist.

17. Stromerzeugersatz mit:
einem thermischen Motor (7), der wenigstens ein elektrisches Stellglied (2) zum Steuern der Kraftstoffzufuhr aufweist,
einem Wechselstromgenerator (3), der durch den thermischen Motor angetrieben wird,
einem Geschwindigkeitsregler (4) des thermischen Motors, der das oder die Stellglied(er) steuert,
einer Steuervorrichtung gemäß einem der vorstehenden Ansprüche.

18. Verfahren zur Steuerung eines thermischen Motors (7) eines Stromerzeugersatzes mit einem durch den thermischen Motor angetriebenen Wechselstromgenerator und einem Geschwindigkeitsregler (4) des thermischen Motors (7), wobei
die durch den Wechselstromgenerator gelieferte Spannung überwacht wird,
ausgehend von der überwachten Spannung eine eventuelle Änderung der Last des Wechselstromgenerators (3) erfasst wird,
mittels der so erfassten Laständerung auf wenigstens ein elektrisches Stellglied (2) des thermischen Motors so eingewirkt wird, dass eine Modifikation der Kraftstoffzufuhr des thermischen Motors (7) hervorgerufen wird, die auf eine Kompensation der Geschwindigkeitsänderung des Stromerzeugersatzes gerichtet ist, indem ein Steuersignal geliefert wird, das direkt auf das oder die Stellglied(er) (2) wirkt, um ein Ausgangssignal des Geschwindigkeitsreglers (4) gemäß der erfassten Laständerung zu ersetzen oder zu überlagern, oder indem ein Steuersignal geliefert wird, das unter Zwischenschaltung wenigstens eines Abschnitts des Geschwindigkeitsreglers (4) auf das oder die Stellglied(er) (2) wirkt, um ein Signal des Geschwindigkeitsreglers (4) zu ersetzen.

19. Verfahren nach dem vorstehenden Anspruch, wobei bei Erfassung eines Anwachsens der Last des Wechselstromgenerators (3) auf das oder die elektrischen Stellglieder (2) so eingewirkt wird, dass die Kraftstoffzufuhr des Motors erhöht wird.

20. Verfahren nach Anspruch 18, wobei bei Erfassung einer Verringerung der Last des Wechselstromgenerators (3) auf das oder die Stellglieder (2) so eingewirkt wird, dass die Kraftstoffzufuhr des Motors verringert wird.

21. Verfahren nach einem der Ansprüche 18 bis 20, wobei auf das oder die Stellglieder (2) nachgeschaltet zu dem Geschwindigkeitsregler (4) des thermischen Motors (7) eingewirkt wird.

22. Verfahren nach einem der Ansprüche 18 bis 20, wobei auf das oder die Stellglieder (2) nachgeschaltet zu wenigstens einem Teil einer Regelschaltung des Geschwindigkeitsreglers (4) des thermischen Motors (7) eingewirkt wird.

23. Verfahren nach einem der Ansprüche 18 bis 22, wobei die an dem oder den Stellglied(er) (2) angelegte Spannung erhöht wird, um die Kraftstoffzufuhr des Motors zu erhöhen.

24. Verfahren nach einem der Ansprüche 18 bis 23, wobei der Strom in einer Spule des oder der Stellglieder (2) verringert wird, um die Kraftstoffzufuhr des Motors (7) zu verringern.
